# EUROPÄISCHE PATENTSCHRIFT

(11) **EP 2 646 492 B1**
(45) Veröffentlichungstag und Bekanntmachung des Hinweises auf die Patenterteilung: **19.11.2014**
(21) Anmeldenummer: 11788161.5
(22) Anmeldetag: 28.11.2011
(51) Int. Cl.: C08G 69/18

(54) **VERFAHREN ZUR POLYMERISATION VON LACTAM**
PROCESS FOR POLYMERIZING LACTAM
PROCÉDÉ DE POLYMÉRISATION DE LACTAME

(30) Priorität: 03.12.2010 EP 10193593
(43) Veröffentlichungstag der Anmeldung: 09.10.2013
(73) Patentinhaber: BASF SE, 67056 Ludwigshafen (DE)
(72) Erfinder: BIEDASEK, Silke, 68159 Mannheim (DE); DESBOIS, Philippe, 68535 Edingen-Neckarhausen (DE); ABBOUD, Mohammed, Royal Oak, MI 48067 (US); WOLLNY, Andreas, 67251 Freinsheim (DE)
(86) Internationale Anmeldenummer: PCT/EP2011/071121
(87) Internationale Veröffentlichungsnummer: WO 2012/072545

(56) Entgegenhaltungen:
- WO-A1-2010/086433
- DE-A1- 2 357 568
- US-A- 3 325 455
- MUHAMMED ABDEL MONEIM EL AZMIRLI ET AL: "Anionic polymerization of epsilon-caprolactam in the presence of isocyanates as activators", POLYMER SCIENCE U.S.S.R, PERGAMON, Bd. 9, Nr. 4, 1967, Seiten 1057-1063, XP022910713, ISSN: 0032-3950, DOI: 10.1016/0032-3950(67)90308-5
- LAURA RICCO, SAVERIO RUSSO, GIUSTINO OREFICE, FERNANDO RIVA: "Anionic Poly([epsilon]-caprolactam): Relationships among Conditions of Synthesis, Chain Regularity, Reticular Order, and Polymorphism", MACROMOLECULES, Bd. 32, Nr. 23, 1. November 1999 (1999-11-01), Seiten 7726-7731, XP055000019, ISSN: 0024-9297, DOI: 10.1021/ma9909004 in der Anmeldung erwähnt

## Beschreibung

Die vorliegende Erfindung betrifft ein neues Verfahren zur anionischen Polymerisation von Lactam-Monomeren.

Die anionische Polymerisation von Lactam-Monomeren zur Herstellung von Polyamiden ist bekannt.

Aus DE-A-14 20 241 ist beispielsweise ein Verfahren zur Herstellung von linearen Polyamidketten durch Addition von KOH als Katalysator und 1,6-bis-(N,N-dibutylureido)-hexan als Aktivator durch sog. anionische Polymerisation von Lactamen bekannt.

Aus Polyamide, Kunststoff Handbuch Vol. 3/4, ISBN 3-446-16486-3, 1998, Carl Hanser Verlag, 49-52 ist die aktivierte anionische Lactampolymerisation bekannt. Darin wird die Verwendung von Na-Caprolactamat als Katalysator kombiniert mit Acyllactamderivaten zur Herstellung von linearen Polyamiden beschrieben.

Aus Macromolecules, Vol. 32, No.23 (1999) Seite 7726 ist ebenfalls die aktivierte anionische Lactampolymerisation bekannt. Darin wird die Verwendung von Natriumcaprolactamat als Katalysator kombiniert mit N,N'-Hexamethylen-bis-(2-oxo-1-azepanylcarboxamid) zur Herstellung von linearen Polyamiden beschrieben.

Das Verfahren der Sprühpolymerisation ist bekannt und mehrfach im Stand der Technik beschrieben worden. So beschreiben beispielsweise WO 2005/111088 A1 sowie WO 2006/024368 A1 die radikalische Sprühpolymerisation von Monomeren wie Acrylsäure, mit dem Ziel, wasserquellbare Polymerpartikel ("Superabsorber" bzw. super absorbent polymers, SAP) oder polymere Verdicker herzustellen. DE 10 2005 048 698 A1 befasst sich mit der Sprühpolymerisation von Isobuten zu Polyisobuten (PIB).

In US3325455 "Method of producing nylon powders" wird ein Verfahren zur Herstellung von Polylactampulvem durch Polymerisation von Monomertropfen beschrieben. Hierbei wird die reaktionsfähige Mischung in einem beheizten Rührbehälter durch Vermischen von Lactammonomer, Aktivator und Katalysator hergestellt. Diese Mischung wird mittels einer Pumpe gefördert und mittels einer Düse in ein Reaktionsgefäß gesprüht, welches mit Inertgas beschickt ist. Die Gastemperatur wird dabei so gewählt, dass die Polymerisationsreaktion sofort startet.

Nach US 3325455 werden die Komponenten zunächst batchweise in einem Rührbehälter vermischt, um dann kontinuierlich versprüht zu werden. Die nur teilweise kontinuierliche Verfahrensführung gemäß nach dieser Offenbarung hat jedoch zur Folge, dass entweder nur eine sehr geringe Menge an Reaktionsgemisch zurzeit vorgelegt werden kann oder dass bei größeren Ansätzen in Folge der Verweilzeitverteilung in der Vorlage der Umsatz des Reaktionsgemisches während des Versprühens ansteigt, wodurch sich im Prozess kein stationärer Zustand ausbilden kann. Zudem beginnt das Reaktionsgemisch bei den verwendeten Temperaturen von 150 °C bereits in der Vorlage zu polymerisieren, jedenfalls bei höheren Katalysatorkonzentrationen. Dadurch ändern sich mit der Zeit das Molekulargewicht Mw und die Molekulargewichtsverteilung, sowie die Viskosität und damit die Teilchengröße. Das erhaltene Polyamid-Pulver ändert sich also mit der Zeit in Form und Eigenschaften.

WO 2010/031705 A1 offenbart ein Verfahren zur Herstellung von Polymerpartikeln durch radikalische Emulsionspolymerisation. WO 2010/086433 A beschreibt ein Verfahren der anionischen Polymerisation in einer Ölphase; das Produkt enthält hierbei allerdings einen gewissen Anteil an Öl.

Nach den Verfahren, die im Stand der Technik beschrieben sind, muss zudem in vielen Fällen mit relativ hohen Verlusten an Monomer und somit einer relativ geringen Ausbeute an Polymer gerechnet werden.

Es stellte sich somit die Aufgabe, ein Verfahren zur anionischen Polymerisation von Lactam-Monomeren bereitzustellen, das die genannten Nachteile vermeidet. Es sollte also ein Verfahren bereitgestellt werden, das Polyamidpartikel mit konstanten Produkteigenschaften liefert (wie Viskosität und Vernetzungsgrad); weiterhin sollte das Verfahren eine möglichst hohe Produktausbeute ergeben und eine definierte Teilchengröße und Teilchengrößenverteilung liefern. Die erhaltenen Polyamidpartikel sollten zudem möglichst wenige Verunreinigungen aufweisen.

Die genannte Aufgabe konnte gelöst werden durch das erfindungsgemäße Verfahren, wie es in den Ansprüchen definiert ist.

Der Gegenstand der vorliegenden Erfindung ist somit ein Verfahren zur Herstellung von Polyamidpartikeln durch anionische Polymerisation mindestens eines Lactams unter Verwendung mindestens eines Katalysators und mindestens eines Aktivators, wobei diskrete Tropfen des Reaktionsgemisches in eine umgebende Gasphase dosiert und zur Reaktion gebracht werden wobei die Dosierung des Lactams, Katalysators und des Aktivators sowie die Mischung der Komponenten kontinuierlich erfolgen.

Der Begriff "Polyamidpartikel" bezieht sich im Rahmen dieser Erfindung auf annähernd kugelförmige Teilchen mit einem mittleren Durchmesser zwischen 1 und 2000 µm. Die Teilchen können porös und/ oder mit Flüssigkeit gefüllt sein.

In einer Ausführungsform des erfindungsgemäßen Verfahrens wird genau ein Lactam-Monomer verwendet.

In einer Ausführungsform des erfindungsgemäßen Verfahrens wird genau ein Katalysator verwendet.

In einer besonders bevorzugten Ausführungsform wird genau ein Aktivator verwendet.

Im erfindungsgemäßen Verfahren erfolgt die Dosierung und Vermischung der einzelnen Komponenten und somit die Erzeugung des reaktiven Gemisches kontinuierlich, im Gegensatz zu konventionellen Verfahren. Dieses führt zu stationären Prozessbedingungen mit konstanten Produkteigenschaften und einer deutlich höheren Standzeit des Prozesses.

Das erfindungsgemäße Verfahren unterscheidet sich somit jedenfalls in der Art der Herstellung des reaktionsfähigen Gemisches von US 3325455.

Erfindungsgemäß werden das Lactam-Monomer (z.B. ε-Caprolactam), mindestens ein Katalysator und mindestens ein Aktivator bevorzugt getrennt voneinander als Schmelze vorgelegt. Alle Komponenten werden kontinuierlich gefördert und vermischt.

Der Katalysator und der Aktivator können jeweils auch als Lösung im Lactam-Monomer vorliegen; wichtig ist jedoch, dass Katalysator und Aktivator getrennt voneinander vorgelegt werden.

In einer Ausführungsform der Erfindung wird zum Lactamstrom zunächst der Aktivator zugemischt, und in dieses Gemisch wird danach der Katalysator eingemischt. Erst mit der Zugabe des Katalysators entsteht ein reaktionsfähiges Gemisch. Dieses wird zum Beispiel durch Versprühen über eine Düse oder über Vertropfen in einen mit heißem Inertgas beschickten Reaktor (z. B. Sprühturm) in diskrete Tropen überführt. Während des Fallens der Tropfens im Reaktor findet die anionische Polymerisation des Lactams und somit die Herstellung von Polyamid statt. Am Austrag werden Polyamidpartikel erhalten.

Die Reihenfolge der Einmischung des Aktivators und des Katalysators kann in einer weiteren Ausführungsform der Erfindung auch umgekehrt erfolgen.

Die Vorlagen und Dosierleitungen sind in der Regel auf eine Temperatur zwischen dem Schmelzpunkt des verwendeten Monomers und der Reaktionstemperatur, die im Reaktor, wie z. B. in einem Turmreaktor, herrscht, temperiert. Jedoch kann der Monomerfeed vor der Herstellung des reaktionsfähigen Gemisches auch auf Temperaturen von bis zu 50 K über der Gastemperatur im Reaktor eingestellt werden.

Als "reaktionsfähig" wird im Folgenden ein Gemisch bezeichnet, das jeweils mindestens ein Lactam-Monomer, mindestens einen Katalysator und mindestens einen Aktivator enthält.

Über die Verweilzeit zwischen der Einmischstelle, ab der das reaktionsfähige Gemisch vorliegt, und der Düse, sowie der Temperaturführung auf der Verweilzeitstrecke, kann der Reaktionsumsatz vor dem Überführen in die Tropfenform zwischen 0 bis 50 %, bevorzugt 0 bis 30 % eingestellt werden.

Nach Beendigung des erfindungsgemäßen Verfahrens muss der Umsatz nicht vollständig sein. Bevorzugt liegt der Umsatz am Ende des erfindungsgemäßen Verfahrens im Bereich von 50 bis 100 %, besonders bevorzugt von 90 bis 100 %.

Als Lactam eignen sich zum Beispiel Caprolactam, Piperidon, Pyrrolidon, Lauryllactam oder deren Mischungen, bevorzugt Caprolactam, Lauryllactam oder deren Mischungen, besonders bevorzugt Caprolactam oder Lauryllactam. Außerdem ist es auch möglich, eine Mischung von Lactam-Monomer(en) mit einem oder mehreren cyclischen Lactonen, wie z. B. Caprolacton, zu verwenden.

In einer bevorzugten Ausführungsform des erfindungsgemäßen Verfahrens ist mindestens ein Lactam ausgewählt aus der Gruppe umfassend Caprolactam, Lauryllactam und deren Mischungen.

Als Aktivator eignen sich unter anderem aliphatische Diisocyanate wie Butylendiisocyanat, Hexamethylendiisiocyanat (HDI), Octamethylendüsocyanat, Decamethylendiisocyanat, Undecamethylendiisocyanat, Dodecamethylendiisocyanat, Isophorondiisocyanat, 4,4'-Methylen-bis(cyclohexyl)isocyanat), sowie auch aromatische Diisocyanate wie Toluylendiisocyanat, 4,4'-Methylenbis(phenyl-isocyanat), oder Polyisocyanate wie Isocyanurate von Hexamethylendiisocyanat, Basonat® HI 100 der BASF SE, Allophanate wie Ethylallophanat oder deren Mischungen, bevorzugt Hexamethylendiisocyanat, Isophorondiisocyanat, besonders bevorzugt Hexamethylendiisocyanat. Die Diisocyanate können durch Monoisocyanate ersetzt werden.

Alternativ eignen sich als Aktivator auch Disäurehalogenide wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, Isophorondisäurechlorid, Isophorondisäurebromid, 4,4'-Methylenbis(cyclohexyl)säurechlorid, 4,4'-Methylenbis(cyclohexyl)säurebromid als auch aromatische Disäurehalogenide wie Toluyldisäurechlorid, Toluylmethylendisäurebromid, 4,4'-Methylenbis(phenyl)säurechlorid, 4,4'-Methylenbis(phenyl)säurebromid, oder deren Mischungen, bevorzugt Hexamethylendisäurechlorid, Hexamethylendisäurebromid oder deren Mischungen, besonders bevorzugt Hexamethylendisäurechlorid. Die Disäurehalogenide können durch Monosäurehalogenide ersetzt werden. Ein bevorzugter Aktivator ist Brüggolen® C20 (eine Lösung von HDI in Caprolactam).

In einer bevorzugten Ausführungsform des erfindungsgemäßen Verfahrens ist mindestens ein Aktivator ausgewählt aus der Gruppe umfassend Hexamethylendiisiocyanat (HDI) und Isophorondiisocyanat.

In einer weiteren bevorzugten Ausführungsform des erfindungsgemäßen Verfahrens ist der Aktivator mit Lactam gecapptes HDI.

Als Katalysator eignen sich unter anderem Natriumcaprolactamat, Kaliumcaprolactamat, Bromidmagnesiumcaprolactamat, Chloridmagnesiumcaprolactamat, Magnesiumbiscaprolactamat, Natriumhydride, Natrium-Metall, Natriumhydroxid, Natriummethoxid, Natriumethoxid, Natriumpropoxid, Natriumbutoxid, Kaliumhydrid, Kaliummetall, Kaliumhydroxid, Kaliummethoxid, Kaliumethoxid, Kaliumpropoxid, Kaliumbutoxid, bevorzugt Natriumhydride, Natrium-Metall, Natriumcaprolactamat, besonders bevorzugt Natriumcaprolactamat. (Brüggolen® C 10, eine Lösung aus 18 Gew.-% Natriumcaprolactamat in Caprolactam).
In einer bevorzugten Ausführungsform des erfindungsgemäßen Verfahrens ist mindestens ein Katalysator ausgewählt aus der Gruppe umfassend Natriumhydride, Natrium-Metall und Natriumcaprolactamat.

Das Molverhältnis von Lactam zum Katalysator kann in weiten Grenzen variiert werden, beträgt in der Regel 1:1 bis 10.000:1, bevorzugt 10:1 bis 1.000:1, besonders bevorzugt 50:1 bis 300:1.

Das Molverhältnis von Aktivator zum Katalysator kann in weiten Grenzen variiert werden, beträgt in der Regel 100:1 bis 1:10.000, bevorzugt 10:1 bis 1:100, besonders bevorzugt 1:1 bis 1:10.

Die Polymerisation kann auch in Gegenwart von Vernetzern durchgeführt werden.

Die Polymerisation kann auch in Gegenwart weiterer Additive, wie Füllstoffe (bevorzugt anorganische Füllstoffe) oder Polymere (beispielsweise lösliche Polymere, die als Verdicker wirken), mit einem mittleren Teilchendurchmesser von kleiner als 50 µm durchgeführt werden. Auch Treibmittel, wie chemische oder physikalische Treibmittel, können eingesetzt werden; hierbei können Treibmittel eingesetzt werden, die eine Verdampfungstemperatur unter der Reaktionstemperatur, ebenso wie Treibmittel, die eine Verdampfungstemperatur über der Reaktionstemperatur aufweisen.

Die Reaktion wird vorzugsweise in Apparaten durchgeführt, die auch zur Sprühtrocknung geeignet sind. Derartige Apparate werden beispielsweise in K. Masters, Spray Drying Handbook, 5th Edition, Longman, 1991, S.23-66, beschrieben.

Im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Der Durchsatz je Sprühdüse beträgt zweckmäßig 0,1 bis 10 m³/h, häufig 0,5 bis 5 m³/h.

Die Reaktion kann auch in Apparaten durchgeführt werden, in denen die Monomerlösung in Form monodisperser Tropfen frei fallen kann. Geeignet dazu sind Apparaturen, wie sie beispielsweise in US 5,269,980 beschrieben sind.

Eine Tropfenerzeugung durch laminaren Strahlzerfall, wie in Rev. Sci. Instr. 38 (1966) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten diskreten Tropfen weisen in der Regel einen mittleren Durchmesser von 1 bis 2000 µm, vorzugsweise 10 bis 1.000 µm, besonders bevorzugt von 10 bis 500 µm, ganz besonders bevorzugt von 100 bis 200 µm, auf, wobei der Tropfendurchmesser durch Lichtstreuung bestimmt werden kann und den volumengemittelten mittleren Durchmesser bedeutet.

Der Polymerisationsreaktor kann von einem Gas durchströmt werden. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50 %, besonders bevorzugt zu mindestens 75 %, als Kreisgas in den Reaktionsraum zurückgeführt. Üblicherweise wird eine Teilmenge des Trägergases nach jedem Durchgang ausgeschleust, vorzugsweise bis zu 10 %, besonders bevorzugt bis zu 3 %, ganz besonders bevorzugt bis zu 1 %.

Der Sauerstoffgehalt des Trägergases beträgt vorzugsweise maximal 15 Vol.-%, besonders bevorzugt maximal 5 Vol.-%, ganz besonders bevorzugt maximal 0,1 Vol.-%.

Das Trägergas enthält neben Sauerstoff vorzugsweise ein Inertgas, besonders bevorzugt Stickstoff. Der Inertgasgehalt des Trägergases beträgt vorzugsweise mindestens 80 Vol.-%, besonders bevorzugt mindestens 90 Vol.-%, ganz besonders bevorzugt mindestens 95 Vol.-%.

In einer weiteren Ausführungsform wird das Trägergas mit dem Lactam-Monomer beladen.

Der Lactamgehalt in der Gasphase des Reaktors beträgt dann vorzugsweise mindestens 50 %, besonders bevorzugt mindestens 75 % und ganz besonders bevorzugt mindestens 90 % der Sättigungskonzentration bei der herrschenden Gasphasentemperatur im Turmreaktor.

In einer weiteren Ausführungsform des erfindungsgemäßen Verfahrens beträgt die relative Konzentration der Lactam-Monomeren in der Gasphase des Reaktors zwischen 50 % und 100 %, bevorzugt zwischen 60% und 100 %, besonders bevorzugt 80 % bis 100 %, der zu der vorliegenden Gastemperatur zugehörigen Sättigungskonzentration liegt.

Die Gasgeschwindigkeit wird vorzugsweise so eingestellt, dass die Strömung im Polymerisationsreaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Gaseingangstemperatur, d.h. die Temperatur, mit der das Gas in den Reaktionsraum eintritt, beträgt vorzugsweise von 120 bis 250°C, besonders bevorzugt von 140 bis 200°C, ganz besonders bevorzugt von 150 bis 170°C.

In einer bevorzugten Ausführungsform des erfindungsgemäßen Verfahrens beträgt die Innentemperatur des Reaktors 130 - 170 °C.

Die Reaktion kann im Überdruck oder im Unterdruck durchgeführt werden, ein Überdruck von bis zu 100 mbar gegenüber dem Umgebungsdruck ist bevorzugt

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Es kann auch eine Nachbehandlung, z. B. in einem Wirbel- oder Fließbett stattfinden. Dadurch ergibt sich für das Reaktionsgemisch eine längere Verweilzeit im Reaktor; dadurch kann in der Regel der Umsatz weiter erhöht werden.

Die erwähnte Nachbehandlung wird bevorzugt unter Spülung durch Inertgas, besonders bevorzugt Stickstoff, bei Temperaturen von 120-170 °C durchgeführt.

Die erhaltenen Polyamidpartikel können auch extrahiert werden, z. B. durch wässrige Extraktion. Durch Kontakt mit Wasser können die Eigenschaften der Polyamidpartikel weiter positiv beeinflusst werden.

Die nach dem erfindungsgemäßen Verfahren erhaltenen Polyamide weisen in der Regel eine Viskositätszahl (VZ) von 20 bis 1000, bevorzugt 50 bis 800, besonders bevorzugt von 80-500 auf. In einer weiteren bevorzugten Ausführungsform des erfindungsgemäßen Verfahrens werden vernetzte Polyamidpartikel erhalten.

Ein weiterer Gegenstand der vorliegenden Erfindung sind somit auch gemäß dem erfindungsgemäßen Verfahren erhältliche Polymerpartikel.

Nach dem erfindungsgemäßen Verfahren lassen sich unter anderem quervernetzte Polyamide beliebiger Polyamide, beispielsweise Polyamid-3, Polyamid-4, Polyamid-5, Polyamid-6, Polyamid-7, Polyamid-8, Polyamid-9, Polyamid-10, Polyamid-11, Polyamid-12, Polyamid-13, Polyamid-14, Polyamid-15, Polyamid-16, Polyamid-17 und Polyamid-18 oder Co-Polyamide wie Polyamid-4/6, Polyamid-5/6, Polyamid-4/5, Polyamid-6/7, Polyamid-6/8, Polyamid-6/9, Polyamid-6/10, Polyamid-6/12, Polyamid-4/12, Polyamid-4/10, Polyamid-5/10, Polyamid-5/12, bevorzugt Polyamid-6, Polyamid-12, Polyamid-4/6, Polyamid-5/6, Polyamid-4/12, Polyamid-5/12, besonders bevorzugt Polyamid-6 und Polyamid-12, insbesondere Polyamid-6 herstellen.

Die Polyamidpartikel, die nach dem erfindungsgemäßen Verfahren herstellbar sind, können unter anderem für Extrusionsfilme, Filamente, Standard-Spritzgußanwendungen, Lasersintern, Flammspritzen, Pulverbeschichtung, Rotomolding, Organobleche und/oder Kosmetika verwendet werden.

Ein weiterer Gegenstand der vorliegenden Erfindung ist somit die Verwendung der nach dem erfindungsgemäßen Verfahren herstellbaren Polyamidpartikel in den oben genannten Anwendungen.

### Beispiele

Die folgenden Beispiele dienen der Veranschaulichung gewisser Aspekte der vorliegenden Erfindung. Keinesfalls sollen die Beispiele als einschränkend für den Umfang der Erfindung angesehen werden.

Die Viskositätszahl (VZ) wurde bestimmt gemäß ISO 307 (bei C = 5 g/l in 96 %iger Schwefelsäure).

### Beispiel 1

ε-Caprolactam wurde bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 110 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm mittels Zweistoffdüse versprüht. Dabei war die Gasphase mit ε-Caprolactam gesättigt. Die Temperatur der Gasphase im Sprühturm betrug 180 °C. Es wurden sphärische Polyamidpartikel mit einer durchschnittlichen Partikelgröße von 160 µm und einer Viskositätszahl von 220 ml/g erhalten.

### Beispiel 2

ε-Caprolactam wurde bei 85 °C mit einer Förderrate von 8,68 kg/h kontinuierlich mit einer Lösung bestehend aus 90,8 Gewichtsprozent ε-Caprolactam und 9,2 Gewichtsprozent Natriumcaprolactamat, die mit einer Förderrate von 2,71 kg/h zugegeben wurde, in einem statischen Mischer kontinuierlich vermischt. Diese Mischung wurde auf 160 °C temperiert. Nach kontinuierlicher Zugabe von 0,61 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm mittels Zweistoffdüse versprüht. Dabei war die Gasphase mit ε-Caprolactam gesättigt. Die Temperatur der Gasphase im Sprühturm betrug 140 °C. Es wurden sphärische Polyamidpartikel mit einer durchschnittlichen Partikelgröße von 160 µm und einer Viskositätszahl von 160 ml/g erhalten.

Die erhaltenen Polyamidpartikel aus den beiden Beispielen waren perfekt rieselfähig.

## Patentansprüche

1. Verfahren zur Herstellung von Polyamidpartikeln durch anionische Polymerisation mindestens eines Lactams unter Verwendung mindestens eines Katalysators und mindestens eines Aktivators, wobei diskrete Tropfen des Reaktionsgemisches in eine umgebende Gasphase dosiert und zur Reaktion gebracht werden, wobei die Dosierung des Lactams, Katalysators und des Aktivators sowie die Mischung der Komponenten kontinuierlich erfolgen.

2. Verfahren zur Herstellung von Polyamidpartikeln gemäß Anspruch 1, wobei mindestens ein Lactam ausgewählt ist aus der Gruppe umfassend Caprolactam, Lauryllactam und deren Mischungen.

3. Verfahren zur Herstellung von Polyamidpartikeln gemäß Anspruch 1 oder 2, wobei mindestens ein Katalysator ausgewählt ist aus der Gruppe umfassend Natriumhydride, Natrium-Metall und Natriumcaprolactamat.

4. Verfahren zur Herstellung von Polyamidpartikeln gemäß einem der Ansprüche 1 bis 3, wobei mindestens ein Aktivator ausgewählt ist aus der Gruppe umfassend Hexamethylendiisocyanat und Isophorondiisocyanat.

5. Verfahren zur Herstellung von Polyamidpartikeln gemäß einem der Ansprüche 1 bis 4, wobei der Aktivator mit Lactam gecapptes HDI ist.

6. Verfahren zur Herstellung von Polyamidpartikeln gemäß einem der Ansprüche 1 bis 5, wobei das Molverhältnis von Lactam zu Katalysator 1:1 bis 10.000:1 beträgt.

7. Verfahren zur Herstellung von Polyamidpartikeln gemäß einem der Ansprüche 1 bis 6, wobei das Molverhältnis von Aktivator zu Katalysator 100:1 bis 1:10.000 beträgt.

8. Verfahren zur Herstellung von Polyamidpartikeln gemäß einem der Ansprüche 1 bis 7, wobei die Vorlagen, die die Ausgangskomponenten enthalten, jeweils eine Temperatur aufweisen, die zwischen dem Schmelzpunkt des verwendeten Lactam-Monomers und der Reaktionstemperatur im Reaktor liegt.

9. Verfahren zur Herstellung von Polyamidpartikeln gemäß einem der Ansprüche 1 bis 8, wobei der Monomerfeed vor der Herstellung des reaktionsfähigen Gemisches auf Temperaturen von bis zu 50 K über der Gastemperatur im Reaktor eingestellt wird.

10. Verfahren zur Herstellung von Polyamidpartikeln gemäß einem der Ansprüche 1 bis 9, wobei die relative Konzentration der Lactam-Monomeren in der Gasphase des Reaktors zwischen 50 % und 100 % der zu der vorliegenden Gastemperatur zugehörigen Sättigungskonzentration liegt.

11. Verfahren zur Herstellung von Polyamidpartikeln gemäß einem der Ansprüche 1 bis 10, wobei die Innentemperatur des Reaktors 130 - 170 °C beträgt.

12. Verfahren zur Herstellung von Polyamidpartikeln gemäß einem der Ansprüche 1 bis 11, wobei die erhaltenen Polyamidpartikel einen mittleren Durchmesser zwischen 1 und 2000 µm aufweisen.

13. Verfahren zur Herstellung von Polyamidpartikeln gemäß einem der Ansprüche 1 bis 12, wobei der Umsatz vor dem Überführen in die Tropfenform 0 bis 50 % beträgt.

14. Verfahren zur Herstellung von Polyamidpartikeln gemäß einem der Ansprüche 1 bis 13, - wobei zusätzlich Additive verwendet werden.

15. Verfahren zur Herstellung von Polyamidpartikeln gemäß einem der Ansprüche 1 bis 14, wobei der Umsatz durch Nachbehandlung der erhaltenen Partikel im Wirbel- oder Fließbett weiter erhöht wird.

16. Verfahren zur Herstellung von Polyamidpartikeln gemäß Anspruch 15, wobei die Nachbehandlung unter Spülung durch Inertgas bei Temperaturen von 120-170 °C durchgeführt wird.

## Claims

1. A process for producing polyamide particles via anionic polymerization of at least one lactam with the use of at least one catalyst and of at least one activator, where discrete droplets of the reaction mixture are introduced into a surrounding gas phase and are reacted, where the introduction of the lactam, of the catalyst, and of the activator, and also the mixing of the components, take place continuously.

2. The process for producing polyamide particles according to claim 1, where at least one lactam has been selected from the group comprising caprolactam, laurolactam, and mixtures of these.

3. The process for producing polyamide particles according to claim 1 or 2, where at least one catalyst has been selected from the group comprising sodium hydrides, sodium metal, and sodium caprolactamate.

4. The process for producing polyamide particles according to any of claims 1 to 3, where at least one activator has been selected from the group comprising hexamethylene diisocyanate and isophorone diisocyanate.

5. The process for producing polyamide particles according to any of claims 1 to 4, where the activator is lactam-capped HDI.

6. The process for producing polyamide particles according to any of claims 1 to 5, where the molar ratio of lactam to catalyst is from 1:1 to 10 000:1.

7. The process for producing polyamide particles according to any of claims 1 to 6, where the molar ratio of activator to catalyst is from 100:1 to 1:10 000.

8. The process for producing polyamide particles according to any of claims 1 to 7, where the feed vessels which comprise the starting components respectively have a temperature which is between the melting point of the lactam monomer used and the reaction temperature within the reactor.

9. The process for producing polyamide particles according to any of claims 1 to 8, where, prior to the production of the reactive mixture, the monomer feed is adjusted to temperatures of up to 50 K above the gas temperature within the reactor.

10. The process for producing polyamide particles according to any of claims 1 to 9, where the relative concentration of the lactam monomers in the gas phase of the reactor is from 50% to 100% of the saturation concentration appropriate to the prevailing gas temperature.

11. The process for producing polyamide particles according to any of claims 1 to 10, where the internal temperature of the reactor is from 130 - 170°C.

12. The process for producing polyamide particles according to any of claims 1 to 11, where the average diameter of the resultant polyamide particles is from 1 to 2000 µm.

13. The process for producing polyamide particles according to any of claims 1 to 12, where the conversion prior to conversion to the droplet form is from 0 to 50%.

14. The process for producing polyamide particles according to any of claims 1 to 13, where additives are also used.

15. The process for producing polyamide particles according to any of claims 1 to 14, where the conversion is further increased via posttreatment of the resultant particles in a fluidized bed.

16. The process for producing polyamide particles according to claim 15, where the posttreatment is carried out with flushing by inert gas at temperatures of from 120-170°C.

## Revendications

1. Procédé de fabrication de particules de polyamide par polymérisation anionique d'au moins un lactame en utilisant au moins un catalyseur et au moins un activateur, dans lequel des gouttes discrètes du mélange réactionnel sont introduites par dosage dans une phase gazeuse enveloppante et mises en réaction, l'introduction par dosage du lactame, du catalyseur et de l'activateur ainsi que le mélange des composants ayant lieu en continu.

2. Procédé de fabrication de particules de polyamide selon la revendication 1, dans lequel au moins un lactame est choisi dans le groupe comprenant le caprolactame, le lauryllactame et leurs mélanges.

3. Procédé de fabrication de particules de polyamide selon la revendication 1 ou 2, dans lequel au moins un catalyseur est choisi dans le groupe comprenant les hydrures de sodium, le sodium métallique et le caprolactame de sodium.

4. Procédé de fabrication de particules de polyamide selon l'une quelconque des revendications 1 à 3, dans lequel au moins un activateur est choisi dans le groupe comprenant le diisocyanate d'hexaméthylène et le diisocyanate d'isophorone.

5. Procédé de fabrication de particules de polyamide selon l'une quelconque des revendications 1 à 4, dans lequel l'activateur est l'HDI coiffé avec du lactame.

6. Procédé de fabrication de particules de polyamide selon l'une quelconque des revendications 1 à 5, dans lequel le rapport molaire entre le lactame et le catalyseur est de 1:1 à 10 000:1.

7. Procédé de fabrication de particules de polyamide selon l'une quelconque des revendications 1 à 6, dans lequel le rapport molaire entre l'activateur et le catalyseur est de 100:1 à 1:10 000.

8. Procédé de fabrication de particules de polyamide selon l'une quelconque des revendications 1 à 7, dans lequel les récipients qui contiennent les composants de départ présentent chacun une température comprise entre le point de fusion du monomère lactame utilisé et la température de réaction dans le réacteur.

9. Procédé de fabrication de particules de polyamide selon l'une quelconque des revendications 1 à 8, dans lequel l'alimentation en monomère avant la fabrication du mélange réactionnel est ajustée à des températures de jusqu'à 50 K au-dessus de la température du gaz dans le réacteur.

10. Procédé de fabrication de particules de polyamide selon l'une quelconque des revendications 1 à 9, dans lequel la concentration relative des monomères lactame dans la phase gazeuse du réacteur est comprise entre 50 % et 100 % de la concentration à saturation correspondant à la température du gaz présente.

11. Procédé de fabrication de particules de polyamide selon l'une quelconque des revendications 1 à 10, dans lequel la température intérieure du réacteur est de 130 à 170 °C.

12. Procédé de fabrication de particules de polyamide selon l'une quelconque des revendications 1 à 11, dans lequel les particules de polyamide obtenues présentent un diamètre moyen compris entre 1 et 2 000 µm.

13. Procédé de fabrication de particules de polyamide selon l'une quelconque des revendications 1 à 12, dans lequel la conversion avant la mise sous la forme de gouttes est de 0 à 50 %.

14. Procédé de fabrication de particules de polyamide selon l'une quelconque des revendications 1 à 13, dans lequel des additifs supplémentaires sont utilisés.

15. Procédé de fabrication de particules de polyamide selon l'une quelconque des revendications 1 à 14, dans lequel la conversion est davantage augmentée par post-traitement des particules obtenues dans un lit mobile ou fluidisé.

16. Procédé de fabrication de particules de polyamide selon la revendication 15, dans lequel le post-traitement est réalisé par rinçage avec un gaz inerte à des températures de 120 à 170 °C.
